Europäisches Patentamt

European Patent Office

Office européen des brevets

(11) Publication number: **0 033 871**
**B1**

(12) **EUROPEAN PATENT SPECIFICATION**

(45) Date of publication of patent specification: **22.05.85**

(51) Int. Cl.⁴: **C 03 B 37/08, D 01 D 4/02**

(21) Application number: **81100466.2**

(22) Date of filing: **22.01.81**

(54) **Bushing for producing glass fiber filaments.**

(30) Priority: **25.01.80 JP 6945/80**

(43) Date of publication of application:
**19.08.81 Bulletin 81/33**

(45) Publication of the grant of the patent:
**22.05.85 Bulletin 85/21**

(84) Designated Contracting States:
**BE DE FR GB IT**

(56) References cited:
**DE-A-2 165 581**
**GB-A-2 021 092**
**US-A-3 708 271**
**US-A-3 802 857**

(73) Proprietor: **ASAHI FIBER GLASS COMPANY LIMITED**
**No. 1-2, Marunouchi 2-chome Chiyoda-ku Tokyo (JP)**

(72) Inventor: **Take, Hiromasa**
**No. 2985, Kamihemi**
**Sohwa-cho, Sashima-gun Ibaraki-ken (JP)**
Inventor: **Ninomiya, Yuhachi**
**No. 2985, Kamihemi**
**Sohwa-cho, Sashima-gun Ibaraki-ken (JP)**

(74) Representative: **Wächtershäuser, Günter, Dr.**
**Tal 29**
**D-8000 München 2 (DE)**

Courier Press, Leamington Spa, England.

## Description

Background of the Invention
*Field of the Invention*

The present invention relates to a bushing for producing glass fiber filaments. More particularly, it relates to a bushing for producing glass fiber filaments without flooding.

Description of the Prior Arts

Glass fiber filaments have been produced by flowing a molten glass through many small holes formed on a bottom surface of a bushing for holding the molten glass mass;

extruding and drawing the molten glass into filaments and winding the glass filaments on a paper bobbin fitted on a collector which is rotated at high speed, with a traverse swing. The molten glass flow is drawn under drawing force caused by winding to form the glass fiber filaments having a diameter of about 5 to 25 μ and the glass fiber filaments are sized to form a strand which is wound (US—A—3708271; 3802857).

A bushing is usually made of an alloy of noble metal such as platinum and many small holes are formed on the bottom of the bushing and each small hole is located in a tip projection. The tip is used for preventing the flooding phenomenon by which the molten glass flowing through many small holes is bonded by wetting the peripheral parts of the small holes. When the flooding phenomenon is caused, the production can not be continued. The bonded molten glass should be removed from the bottom surface of the bushing before restarting the production. This takes a long time.

Recently, for an improvement of the productivity, a large size of a bushing has been required and an effort for increasing the number of small holes on one bushing has been made. Therefore, it has been considered to use a tipless bushing wherein many small holes are formed on a flat bottom of the bushing without tips. The tipless bushing can be prepared by a simple process in comparison with the bushing equipped with tips and the number of the small holes per unit area can be increased and the tipless bushing has light weight to reduce the amount of the expensive noble metal in comparison with the bushing equipped with tips. On the other hand, the following disadvantages are found.

The bottom of the bushing has many small holes whereby the rigidity is low and the mechanical strength is low to easily cause a deformation in use. Various proposals such as the use of a reinforcing part and a curvature of the bottom of the bushing have been made.

The flooding of the molten glass flow is severe since the flooding spreads over the whole surface of the bottom of the bushing. It is difficult to separate the bonded molten glass or to prevent the bonding of the molten glass.

British patent 2 021 092 while classifying bushings for producing glass filaments into (1) tip orifice plates and (2) orifice plates with a flat undersurface teaches that the former cannot go beyond a rather low maximum density of orifices. The possibility of an increased density of orifices is only contemplated for orifice plates with a flat undersurface and British patent 2 021 092 tries to alleviate the above-mentioned problems by cutting sets of intersecting grooves in between the rows of orifices. This produces square lands in which the orifices are located. Such a bushing with square projections and intersecting grooves has a reduced strength and cracks easily form at the corner portions. Further, it is difficult to reestablish a suitably working bushing once a flooding has occurred.

While bushings for producing resin fibers are known (for example from DE—OS 21 65 581) the requirements for bushings for that purpose are quite different from those for bushings for producing glass filaments.

Therefore, it is an object of the present invention to provide a bushing for producing glass filaments which has a high mechanical strength combined with a high number of throughholes per unit area which does not cause frequent flooding and which once flooding has occured is easily restorable.

This problem is solved by a bushing for producing glass filaments with a multitude of throughholes having a diameter of from 0.7 to 2.0 mm and a distance between centers of adjacent throughholes of 1.3 to 2 times the diameter of the throughholes and terminating within annular projections, which have a height of from 0.5 to 1.5 mm and flat end surfaces with a width of from 0.1 to 0.4 mm and a ratio of the height of the projections to the diameter of the throughholes of 1:1 to 1:6.

Each annular projection has a flat surface at its end. The annular projections are projected in one-piece around the small holes with a curved side wall or with a straight side wall. The height of the annular projection is in the range of 0.5 to 1.5 mm and the ratio of the height to the diameter of each small hole is in the range of 1:1 to 1:6 and the diameter of the small hole is in the range of 0.7 to 2.0 mm and the distance between centers of adjacent small holes is in the range of 1.3 to 2 times the diameter of the small hole. The width of the annular projection is in the range of 0.1 to 0.4 mm.

Brief Description of the Drawings

Figure 1 is an enlarged sectional view of a small hole part of the bushing of the present invention;

Figure 2 is an enlarged bottom view of the small hole part;

Figures 3 and 4 are enlarged sectional views of the other embodiments of the bushing of the present invention;

Figures 5, 6 and 7 show the preparation of the small hole parts;

Figure 8 is a sectional view of the bushing for producing glass fiber filament according to the present invention; and

Figure 9 is a bottom view of the small hole part.

## Detailed Description of the Preferred Embodiments

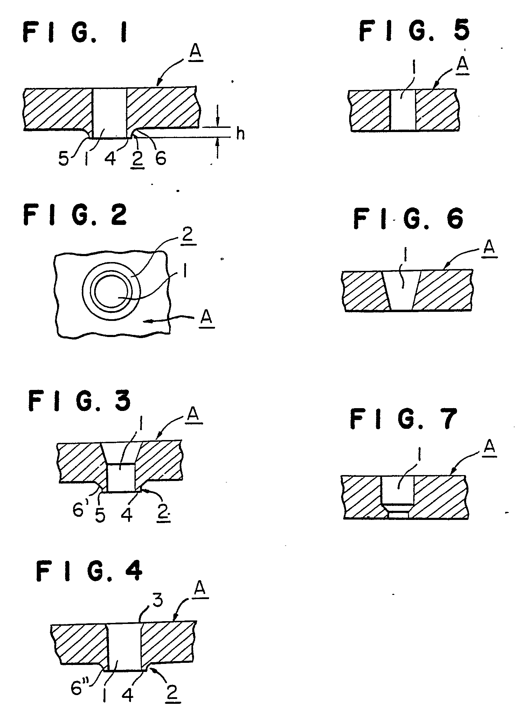

Figure 1 is the enlarged sectional view of the small hole part of the bushing of the present invention. Figure 2 is the enlarged bottom view of the small hole part of the bushing of Figure 1. Figures 3 and 4 are the enlarged sectional views of the other embodiments of the bushing of the present invention as Figure 1. The annular projection (2) having slightly curved side surface is formed on the lower outer peripheral part of the small hole (1) formed on the bottom plate A of the bushing. The height of the annular projection (2) is in the range 0.5 to 1.5 mm.

The annular projection can be formed as follows.

As shown in Figures 5, 6 and 7, small holes (1) having a desired shape are formed in the bottom plate of the bushing and the peripheral edges of the small holes (1) are pressed by a press machine etc. to deform the peripheral edges to form the projections (2) having a curved side wall or a straight side wall. If necessary, the projections are processed by a cutting process or a grinding process. The bottom plate having the small holes and the annular projections can be assembled to prepare the bushing by the conventional method. The details of the assembly of the bushing are not repeated since it is clearly understood from the known methods.

The bushing of the present invention has the above-mentioned structure to impart the following effect.

(1) The bushing of the present invention can have an increased number of the small holes and has light weight similar to a tipless bushing.

(2) The bushing of the present invention has many annular projections around the small holes. The resistivity to bending of the bottom plate of the bushing is improved by these projections. The deformation of the bottom plate of the bushing in the use at high temperature can be reduced in comparison with the conventional tipless bushing. Thus a stable operation can be ensured.

(3) The flooding phenomenon can be substantially prevented. The stable operation can be continued for a long time in comparison with the conventional tipless bushing. The operating efficiency is increased.

(4) Even though molten glass fiber filaments are broken to cause the flooding phenomenon, the time required for returning to the stable working condition can be shortened in comparison with the conventional tipless bushing.

(5) In view of the effects of (2) to (4), the productivity is remarkably increased in comparison with the conventional tipless bushing.

The embodiments of the present invention will be further illustrated. The resistance to the molten glass flow is reduced when the curved edge (3) of the small hole is formed as shown in Figure 4.

In view of the horizontal annular flat end surface (4) at each end of the annular projection as shown in Figures 1 to 4 the molten glass flow through the small holes keeps the same axis as the small hole and accordingly, the number of breaks of the molten glass filaments can be reduced.

In the first embodiment shown in Figure 1 the annular flat end surface (4) of the projection (2) is formed between the inner wall of the small hole (1) and a perpendicular side surface (5) and an adjacent curved side surface (6).

In the second embodiment shown in Figure 3, a slanted side surface (6') is formed and the inlet part of the small hole (1) has a larger diameter than the outlet part of the small hole (1).

In the third embodiment shown in Figure 4, the curved side surface (6") extends to the annular flat end surface (4) of the projection. The peripheral edge (3) of the inlet of the small hole is formed with a curved smooth surface to reduce the resistivity to the molten glass flow. The productivity per unit time can be increased in comparison with conventional bushings having the same size.

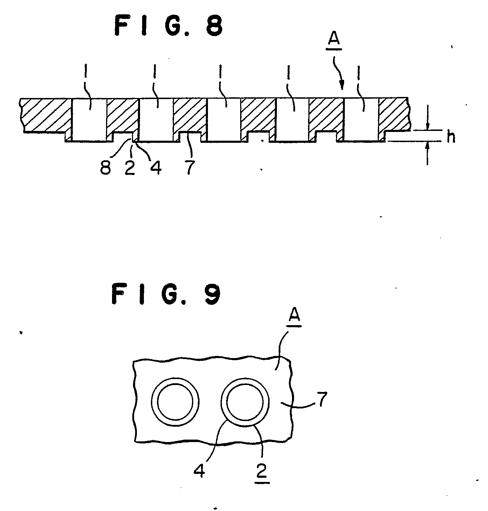

In the fourth embodiment shown in Figures 8 and 9, many small holes (1) are formed in the bottom plate A of the bushing, and annular projections (2) are formed in one-piece on the outer surface (7) to surround the small holes (1), and the end surfaces (4) of the projections are flat and horizontal and the outer side surfaces (8) of the projections (2) are straight and perpendicular to the flat end surface (4).

The transition between the outer side surface to the outer bottom surface (7) is not limited to a perpendicular one but can be curved or slanted if desired.

When the height of the projection (4) is less than 0.5 mm, the flooding phenomenon may be easily caused whereas when it is more than 1.5 mm, it is not easy to separate the bonded molten glass if the flooding is caused.

## Claims

1. A bushing for producing glass filaments with a multitude of throughholes having a diameter of from 0.7 to 2.0 mm and a distance between centers of adjacent throughholes of 1.3 to 2 times the diameter of the throughholes and terminating within annular projections, which have a height of from 0.5 to 1.5 mm and flat end surfaces with a width of from 0.1 to 0.4 mm and a ratio of the height of the projections to the diameter of the throughholes of 1:1 to 1:6.

2. A bushing according to Claim 1, wherein the projections have each a straight outer side surface adjacent to the annular flat end surface with or without a curved outer side surface adjacent to the straight outer side surface.

3. A bushing according to Claim 1, wherein a curved edge surface is formed at each inlet of the throughhole.

## Revendications

1. Filière pour la production de filaments de verre, percée de part en part d'une multitude d'orifices qui ont un diamètre de 0,7 à 2,0 mm et une distance entre les centres des orifices voisins de 1,3 à 2 fois le diamètre des orifices, et qui se terminent par des protubérances annulaires présentant une hauteur de 0,5 à 1,5 mm et des surfaces d'extrémités planes d'une largeur de 0,1 à 0,4 mm, le rapport de la hauteur des protubérances au diamètre des orifices étant de 1:1 à 1:6.

2. Filière selon la revendication 1, dans laquelle les protubérances présentent chacune une surface latérale extérieure droite adjacente à la surface d'extrémité annulaire plane et associée ou non à une surface latérale extérieure incurvée adjacente à la surface latérale extérieure droite.

3. Filière selon la revendication 1, dans laquelle une surface marginale incurvée est formée à chacune des extrémités ouvertes de l'orifice.

**Patentansprüche**

1. Düsenplatte für die Herstellung von Glasfasern mit einer Vielzahl von Durchgangslöchern, die einen Durchmesser von 0,7 bis 2,0 mm aufweisen und wobei der Abstand zwischen den Zentren benachbarter Durchgangslöcher das 1,3 bis 2-fache des Durchmessers der Durchgangslöcher beträgt und die innerhalb ringförmiger Vorsprünge enden, welche eine Höhe von 0,5 bis 1,5 mm haben und flache Endflächen mit einer Breite von 0,1 bis 0,4 mm und wobei das Verhältnis der Höhe der Vorsprünge zu dem Durchmesser der Durchgangslöcher 1:1 bis 1:6 beträgt.

2. Düsenplatte nach Anspruch 1, wobei die Vorsprünge jeweils eine gerade Außenseitenoberfläche benachbart zu der ringförmigen flachen Endfläche aufweisen, und zwar mit oder ohne eine gekrümmte Außenseitenoberfläche benachbart zu der geraden Außenseitenoberfläche.

3. Düsenplatte gemäß Anspruch 1, wobei eine gekrümmte Kantenoberfläche an jedem Einlaß des Durchgangsloches ausgebildet ist.

FIG. 1

FIG. 5

FIG. 2

FIG. 6

FIG. 3

FIG. 7

FIG. 4

# F I G. 8

# F I G. 9

2